# EUROPÄISCHE PATENTSCHRIFT

(11) **EP 3 414 192 B1**
(45) Veröffentlichungstag und Bekanntmachung des Hinweises auf die Patenterteilung: **10.11.2021**
(21) Anmeldenummer: 18700761.2
(22) Anmeldetag: 17.01.2018
(51) Int. Cl.: B65G 15/64, B65G 39/16, B65G 23/44

(54) **ZUFÜHRVORRICHTUNG**
SUPPLY DEVICE
DISPOSITIF D'AMENÉE

(30) Priorität: 02.03.2017 DE 102017002019
(43) Veröffentlichungstag der Anmeldung: 19.12.2018
(73) Patentinhaber: Interroll Holding AG, 6592 Sant' Antonino (CH)
(72) Erfinder: DROSTE, Heinrich, 74889 Sinsheim (DE); DUDEK, Siegmund, 52525 Heinsberg (DE)
(74) Vertreter: Kohlhof, Stephan
(86) Internationale Anmeldenummer: PCT/EP2018/051095
(87) Internationale Veröffentlichungsnummer: WO 2018/157991

(56) Entgegenhaltungen:
- EP-A2- 0 560 480
- WO-A1-2016/064448
- CN-U- 205 327 984
- DE-A1- 19 724 957
- JP-A- H0 656 258
- JP-A- 2001 048 332
- JP-U- S5 568 746
- US-A- 4 561 538
- US-A- 5 507 382
- US-A1- 2013 153 371
- US-B1- 7 232 029

## Beschreibung

Die Erfindung betrifft eine Zuführvorrichtung zum seitlichen Zuführen von Transportgütern auf eine Fördereinrichtung und ein Verfahren zum Bereitstellen einer Zuführvorrichtung zum seitlichen Zuführen von Transportgütern auf eine Fördereinrichtung.

Die derartige Zuführvorrichtung wird insbesondere eingesetzt, um einer Fördereinrichtung Transportgüter seitlich zuzuführen. Bei bekannten Zuführvorrichtungen kann es vorkommen, dass eine Reibung zwischen einem Fördergurt und einer Antriebsrolle nicht ausreicht, um den Fördergurt mittels der Antriebsrolle anzutreiben, das heißt, die Antriebsrolle rutscht unter dem Fördergurt durch.

US 5 507 382 A offenbart ein Verfahren und eine Vorrichtung zum Stabilisieren eines dünnen reibungsfreien Fördergurts gegen eine seitliche Bewegung. Der typische Fördergurt besteht aus Fiberglas, ist teflonbeschichtet und auf Rollen angebracht, von denen eine eine Antriebsrolle ist. Die Antriebsrolle ist mit mindestens einer umlaufend benachbart an deren Ende angeordneten Rippe ausgebildet, wobei der Fördergurt mit einer Spur ausgebildet ist, die die Rippe aufnimmt, wenn die Antriebsrolle rotiert. Die Spur hat entlang ihrer Länge voneinander beabstandete Löcher, die mindestens derart angeordnet sind, dass zwei davon die Antriebsrolle während jeder Umdrehung kontaktieren. Der Durchmesser der Rippe ist weniger als halb so groß wie der Durchmesser des Loches.

US 2013/153371 A1 offenbart eine Vorrichtung und ein Verfahren zum Abstützen eines Flachgurtelements. Die Vorrichtung enthält ein um eine Längsdrehachse rotierbares Trommelelement und hat eine äußere Stützfläche, deren Durchmesser im allgemeinen von einem ersten Endbereich zu einem Zentralbereich ansteigt und von dem Zentralbereich zu einem weiteren Endbereich abnimmt. Der Zentralbereich enthält eine Rille in der Stützfläche, die sich umlaufend um das Trommelelement erstreckt. Ein Ringelement ist in der Rille angeordnet.

EP 0 560 480 A2 offenbart einen Plattenförderer mit einer Förderstrecke, einem Endlosband aus miteinander verbundenen Platten zur translatorischen Bewegung entlang eines Bettes und einer Antriebsmittelbaugruppe zum Vermitteln einer Bewegung in der Förderstrecke und mindestens einem Umlenkrad. Die Antriebsmittelbaugruppe hat eine Kontaktoberfläche zum in Eingriff Bringen mit einer unteren Fläche jeder aufeinanderfolgenden Platte, wobei die Kontaktoberfläche eine Schicht eines elastischen energieaufnehmenden Materials zum Verringern eines Geräuschpegels des Plattenförderers auf unter 85 dB(A) aufweist.

JP H06 56258 A offenbart eine Fördereinrichtung zum Abzweigen von Fördergütern von einem Hauptförderer oder zum Einschleusen von Fördergütern auf einen Hauptförderer. Die Fördereinrichtung hat einen aufgabeseitigen Förderer, einen Zwischenförderer und einen abgabeseitigen Förderer, wobei eine Breite und Form einer Aufgabeseite des aufgabeseitigen Förderers einfach zu verändern ist, mittels an beiden Enden von Rahmenelementen vorgesehenen Rollen und frei rotierbarer Zentrierung auf der Breitenrichtungsachse und um zwischen den Rollen gespannten Endlosgurten. Je nach Breite ist eine Anzahl der Rahmenelemente erhöht oder verringert Endabschnitte des aufgabeseitigen Förderers, des Zwischenförderers und des abgabeseitigen Förderers können optimal geformt sein, wenn eine Länge der Rahmenelemente verändert ist. Die JP H06 56258 A offenbart die Merkmale des Oberbegriffs des Anspruch 1.

CN 205 327 984 U offenbart eine Vorrichtung zum Verhindern eines seitlichen Ablaufens eines Fördergurts, der an seiner Innenseite einen Zentriersteg aufweist. Der Zentriersteg des Fördergurts läuft in einer Nut einer Antriebsrolle, einer Umlenkrolle und einem zwischen der Antriebsrolle und der Umlenkrolle angeordneten Block, um ein seitliches Ablaufens des Fördergurts zu verhindern.

Zur Vermeidung des oben genannten Effekts - dass die Antriebsrolle unter dem Fördergurt durchrutscht - und den damit verbundenen Nachteilen, wie beispielsweise erhöhter Verschleiß des Fördergurts und/oder der Antriebsrolle sowie einem Transportfehler, ist es eine Aufgabe der vorliegenden Erfindung, eine verbesserte Zuführvorrichtung zur Verfügung zu stellen, die insbesondere Transportfehler reduziert.

Die Aufgabe wird durch den Gegenstand des unabhängigen Patentanspruchs gelöst.

Ein Aspekt betrifft eine Zuführvorrichtung zum seitlichen Zuführen von Transportgütern auf eine Fördereinrichtung, die eine Antriebsrolle, mindestens eine Endrolle und mindestens einen Fördergurt enthält. Jeder der Endrollen ist einer der Fördergurte zugeordnet, der die Antriebsrolle und die jeweilige Endrolle umspannt und der mittels der Antriebsrolle antreibbar ist. An der Antriebsrolle ist mindestens ein Reibungserhöhungselement zur Reibungserhöhung, insbesondere zur Haftreibungserhöhung, zwischen dem jeweiligen Fördergurt und der Antriebsrolle ausgebildet.

Die Zuführvorrichtung kann als Teil einer Zuführ-Fördereinrichtung ausgebildet sein, auf der Transportgüter etwa entlang einer Zuführrichtung auf eine Fördereinrichtung befördert werden. Auf der Fördereinrichtung können die Transportgüter etwa entlang einer Förderrichtung befördert werden. Die Zuführvorrichtung kann auch als eine Abführvorrichtung ausgebildet sein, über welche Transportgüter seitlich von der Fördereinrichtung weg geführt werden können.

Die Zuführvorrichtung kann winklig zu der Fördereinrichtung mit einem Aufstellwinkel zwischen der Zuführvorrichtung und der Fördereinrichtung von beispielsweise kleiner als etwa 90°aufgestellt sein. Der Aufstellwinkel kann zwischen etwa 10° und etwa 90° liegen, bevorzugt zwischen etwa 30° bis etwa 60°.

Die Antriebsrolle kann an einem ersten Ende der Zuführvorrichtung ausgebildet sein, das bevorzugt etwa senkrecht zu der Zuführrichtung ausgebildet ist. Ein zweites Ende der Zuführvorrichtung kann als ein Anschlussabschnitt der Zuführvorrichtung ausgebildet sein, mit dem die Zuführvorrichtung an die Fördereinrichtung anschließt und an dem die mindestens eine Endrolle ausgebildet sein kann. Insbesondere ist das erste Ende dem zweiten Ende, insbesondere dem Anschlussabschnitt, bezüglich der Zuführrichtung im Wesentlichen gegenüberliegend angeordnet.

Der Anschlussabschnitt kann mit einem von etwa 90° zu der Zuführrichtung verschiedenen Anschlusswinkel zu der Fördereinrichtung ausgebildet sein, der sich vorteilhafterweise mit dem Aufstellwinkel zu etwa 90° ergänzt. Bevorzugt kann der Anschlusswinkel zwischen etwa 30° bis etwa 60° liegen. Die winklige Ausbildung des Anschlussabschnitts kann eine Zuführförderfläche bedingen, die nicht mehr quaderförmig, sondern als einseitig verlängerter Quader ausgebildet ist. Hierbei kann eine Seite der Zuführförderfläche, welche im Mittel näher an der Fördereinrichtung angeordnet ist und im Wesentlichen parallel zu der Zuführrichtung ausgebildet ist, kürzer ausgebildet als eine im Mittel von der Fördereinrichtung weiter beabstandete und ebenfalls im Wesentlichen zu der Zuführrichtung parallele Seite der Zuführförderfläche. Diese Form der Zuführförderfläche erfordert entweder einen Fördergurt, der auf der kürzeren Seite und auf der längeren Seite der Zuführförderfläche eine jeweils unterschiedliche Gurtlänge aufweist, oder eine Aufteilung des einen Fördergurts in mehrere etwa parallel zueinander und etwa parallel zu der Zuführrichtung angeordnete Fördergurte mit jeweils unterschiedlichen Gurtlängen. Diese unterschiedlich langen Fördergurte können gemeinsam von der einen Antriebsrolle antreibbar sein. Je nach der Breite der Zuführförderfläche (senkrecht zur Zuführrichtung) können mehrere der, insbesondere nebeneinander angeordneten, Fördergurte die gleiche Gurtlänge aufweisen oder alle Fördergurte eine andere Gurtlänge aufweisen.

Es ist mindestens ein Reibungserhöhungselement je Fördergurt ausgebildet. Ein Vorteil der vorliegenden Erfindung ist die mittels des an der Antriebsrolle ausgebildeten Reibungserhöhungselements erhöhte Reibung, insbesondere Haftreibung, zwischen Antriebsrolle und Fördergurt, mittels der ein Durchrutschen der Antriebsrolle unter dem Fördergurt und die damit verbundenen Nachteile wie beispielsweise Transportfehler reduziert werden können.

Für einen Mantel der Antriebsrolle sind verschiedene Werkstoffe wie beispielsweise Metalle geeignet. Für die vorliegende Antriebsrolle ist insbesondere ein verschleißfestes und/oder steifes Material mit einem geringen Trägheitsmoment geeignet. Diese Eigenschaften weisen regelmäßig Leichtmetalle und Verbundwerkstoffe auf, insbesondere kann der Mantel aus Aluminium oder aus einem mit Polyurethan (PU) ummanteltem Stahlrohr ausgebildet sein, beispielsweise mit einem PU mit einer Shore-Härte von, insbesondere mindestens, etwa 80D. In Kombination mit der Führungsleiste des Fördergurts ergibt sich ein Reibungskoeffizient µ von etwa 0,1. Hierdurch ist eine reibungsarme seitliche Führung des Gurtes in der Führungsnut realisierbar. Diese reibungsarme Führung des Gurtes bewirkt vorteilhafterweise einen minimalen Verschleiß und/oder Reibungsverlust. Leider stellt diese reibungsarme Kombination keine ausreichende Sicherheit für die Übertragung des Antriebsmomentes von der Antriebsrolle auf die Laufseite des Fördergurts zur Verfügung. In Kombination des PU mit einer Shore-Härte von, insbesondere mindestens, etwa 80D mit dem mindestens einen Fördergurt, der an der Tragseite mit einem Polyvinylchlorid (PVC) und an der Laufseite mit einem Polyester (PE)-Gewebe ausgebildet sein kann, kann eine Reibungszahl, insbesondere ein Reibungskoeffizient µ, nur etwa 0,15 bis etwa 0,2 für eine Haftreibung zwischen Fördergurt und Antriebsrolle betragen. Um eine Sicherheit einer Übertragung des Antriebsmoments zu erhöhen, ist eine größere Reibung notwendig. Diese kann durch eine höhere Vorspannung des Fördergurts und/oder einen größeren Reibungskoeffizienten µ zwischen Fördergurt und Antriebstrommel erzielt werden. Für eine höhere Vorspannung sind aber beispielsweise höhere Aufwendungen am Spannmechanismus, eine steifere Auslegung der Antriebstrommel und deren Lagerung und/oder ein anderes Gurtmaterial notwendig, so dass ein größerer Reibungskoeffizient µ, insbesondere größer als 0,2, eine wirtschaftliche und montagefreundliche Lösung für eine sichere Übertragung des Antriebsmoments darstellt. Eine zumindest bereichsweise Erhöhung des Reibungskoeffizienten µ, insbesondere im Bereich der Kontaktfläche zwischen Antriebsrolle und Laufseite des Fördergurtes, beispielsweise durch Reibungserhöhungsmittel, ist geeignet, die Sicherheit bei der Übertragung des Antriebsmoments zu erhöhen.

Vorteilhafterweise ist das Reibungserhöhungselement aus einem weichen Material mit einer höheren Reibungszahl ausgebildet, beispielsweise aus Polyurethan (PU) mit einer Shore-Härte von, insbesondere höchstens, etwa 75A bis etwa 80A. In Kombination mit dem mindestens einen Fördergurt, der an der Tragseite mit einem Polyvinylchlorid (PVC) und an der Laufseite mit einem Polyester (PE)-Gewebe ausgebildet sein kann, kann die Reibungszahl, insbesondere der Reibungskoeffizient µ, etwa 0,5 bis etwa 0,6 für eine Haftreibung zwischen Fördergurt und Reibungserhöhungselement betragen. Da das Reibungserhöhungselement weicher ist als die Antriebsrolle, insbesondere als der Mantel der Antriebsrolle, ist mittels Verwendung des Reibungserhöhungselements eine Erhöhung der Reibungszahl zwischen Fördergurt und Antriebsrolle beispielsweise um etwa 100% bis auf etwa 400% erreichbar, insbesondere im Vergleich zu der Reibungszahl zwischen Fördergurt und Antriebsrolle ohne Reibungserhöhungselement.

Vorteilhafterweise kann das Reibungserhöhungselement lösbar an der Antriebsrolle befestigt sein, beispielsweise geklemmt und/oder aufgeschoben, wobei es mittels eigener Spannkraft und/oder Formstabilität, oder mittels mindestens eines separaten Klemmelements und/oder Befestigungselements gehalten ist. Das mindestens eine Klemmelement kann beispielsweise als ein Spannband oder als ein Klemmkeil ausgebildet sein. Das mindestens eine Befestigungselement kann beispielsweise als eine Schraube ausgebildet sein. Somit ist das Reibungserhöhungselement leicht austauschbar im Vergleich zu einem fest an der Antriebsrolle ausgebildeten Reibungserhöhungselement, wie beispielsweise bei einer mit einem Reibbelag beschichteten Antriebsrolle. Zudem ist der Austausch des lösbar befestigten Reibungserhöhungselements als separates Bauteil in der Regel günstiger als eine erneute Beschichtung der Antriebsrolle oder gar als eine neue beschichtete Antriebsrolle. Da das Reibungserhöhungselement grundsätzlich mit zunehmender Betriebsdauer verschleißt, ist dies ein wirtschaftlicher Vorteil.

Alternativ oder zusätzlich dazu kann mindestens ein Reibungserhöhungselement fest an der Antriebsrolle befestigt sein, insbesondere um besondere Anforderungen zu erfüllen. Somit ist beispielsweise bei erhöhter Antriebskraft des mindestens einen Fördergurts und/oder bei erhöhter Last durch Transportgüter eine zuverlässige Befestigung des Reibungserhöhungselements gewährleistet. Ein geeignetes Befestigungsmittel kann in diesem Fall als ein Klebemittel oder als eine Beschichtung der Antriebsrolle mit dem Material des Reibungserhöhungselements ausgebildet sein.

Das Reibungserhöhungselement kann als ein flachriemenartiges ringförmiges, insbesondere elastisches, Band ausgebildet sein.

Das Reibungserhöhungselement kann mit dem Mantel der Antriebsrolle eben sein oder in radialer Richtung über den Mantel der Antriebsrolle hinausragen.

An der Antriebsrolle ist mindestens eine Aufnahme für das Reibungserhöhungselement ausgebildet, die beispielsweise derart dimensioniert ist, dass ein Klemmsitz des Reibungserhöhungselements an der Antriebsrolle ermöglicht ist. Somit ist eine örtlich definierte Befestigung des Reibungserhöhungselements an der Antriebsrolle geschaffen. Zudem ist somit eine zuverlässige Befestigung des Reibungserhöhungselements an der Antriebsrolle geschaffen.

Insbesondere kann zusätzlich zu dem oben Beschriebenen mindestens ein weiteres Reibungserhöhungselement an der mindestens einen Endrolle ausgebildet sein. Die in dieser Beschreibung genannten Merkmale für die Ausbildung des Reibungserhöhungselements an der Antriebsrolle gelten analog für die Ausbildung des mindestens einen Reibungserhöhungselements an der mindestens einen Endrolle.

Die Aufnahme kann als mindestens eine Ringnut ausgebildet sein. Somit ist auf einfache Art und Weise eine Aufnahme für das Reibungserhöhungselement geschaffen. Insbesondere umspannt die Ringnut zumindest teilweise die Antriebsrolle.

Jeder der Fördergurte weist auf seiner Innenseite eine etwa entlang der Zuführrichtung angeordnete Führungsleiste auf, die zur Seitenführung des jeweiligen Fördergurts in eine jeder Führungsleiste zugeordneten Führungsnut eingreift.

Die Führungsleiste kann etwa entlang der Zuführrichtung unterbrochen oder durchgehend ausgebildet sein. Bevorzugt steht die Führungsleiste von der Innenseite jedes der Fördergurte im Wesentlichen senkrecht ab.

Die Führungsleiste kann etwa in der Mitte der Gurtbreite ausgebildet sein. Alternativ dazu kann die Führungsleiste außerhalb der Mitte der Gurtbreite ausgebildet sein.

Jeweils eine der Führungsnuten ist in der Antriebsrolle und in der mindestens einen Endrolle ausgebildet. Die Führungsnut kann etwa entlang der Zuführrichtung unterbrochen oder durchgehend ausgebildet sein.

Zusätzlich dazu kann die der jeweiligen Führungsleiste zugeordnete Führungsnut zumindest teilweise in einem zwischen der Antriebsrolle und den Endrollen angeordneten Bett ausgebildet sein, wobei das Bett insbesondere zum Abstützen des mindestens einen Fördergurts dient. Das Bett kann als eine im Wesentlichen ebene Fläche oder als mindestens eine Tragrolle ausgebildet sein.

Ein seitliches Spiel zwischen der jeweiligen Führungsleiste und der zugeordneten Führungsnut kann in dem Bett geringer sein als in der Antriebsrolle, wobei die Seitenführung des jeweiligen Fördergurts mittels der zugeordneten Führungsnut in dem Bett gewährleistet ist. Das seitliche Spiel ist etwa parallel zu einer Ebene des jeweiligen Fördergurts, beispielsweise einer Ebene einer oberen Außenseite des jeweiligen Fördergurts, und im Wesentlichen senkrecht zu der Zuführrichtung ausgebildet. Die Oberfläche, die durch die oberen Außenseiten der Fördergurte bereitgestellt wird, kann als die Zuführförderfläche ausgebildet sein.

Alternativ dazu kann das seitliche Spiel zwischen der jeweiligen Führungsleiste und der zugeordneten Führungsnut in der Antriebsrolle geringer sein als in dem Bett, wobei die Seitenführung des jeweiligen Fördergurts mittels der zugeordneten Führungsnut in der Antriebsrolle gewährleistet ist. Somit ist die Seitenführung des jeweiligen Fördergurts wirksam auf einer kürzeren Eingriffsstrecke zwischen der jeweiligen Führungsleiste und der zugeordneten Führungsnut sichergestellt, als das bei der Seitenführung des jeweiligen Fördergurts in dem Bett der Fall ist, was alleine aufgrund der verringerten Eingriffsstrecke eine verringerte Reibung und somit einen verringerten Verschleiß an der jeweiligen Führungsleiste und/oder der zugeordneten Führungsnut zur Folge hat.

Vorteilhafterweise ist jede der Führungsleisten aus einem weichen Material ausgebildet, insbesondere Polyurethan (PU), beispielsweise PU mit einer Shore-Härte von, insbesondere höchstens, etwa 65A. Somit ist gewährleistet, dass beim Umlenken des Fördergurts an der Antriebsrolle und an der jeweiligen Endrolle, wobei dessen Führungsleiste gestaucht ist, diese lediglich elastisch verformt ist.

Mit der zugeordneten Führungsnut in der Antriebsrolle, die wie oben beschrieben aus einem harten Material ausgebildet ist, insbesondere aus PU, beispielsweise aus PU mit einer Shore-Härte von, insbesondere mindestens, etwa 80D, ergibt sich prinzipiell eine etwas erhöhte Reibung zwischen der jeweiligen Führungsleiste und der zugeordneten Führungsnut, insbesondere bei dem oben genannten Stauchen der jeweiligen Führungsleiste beim Umlenken. Diese Reibung ist insbesondere mittels des oben genannten seitlichen Spiels zwischen der jeweiligen Führungsleiste und der zugeordneten Führungsnut in der Antriebsrolle derart einstellbar, dass einerseits die Reibung zwischen der jeweiligen Führungsleiste und der zugeordneten Führungsnut in der Antriebsrolle möglichst gering ist und andererseits die oben genannte Seitenführung des jeweiligen Fördergurts mittels der zugeordneten Führungsnut in der Antriebsrolle gewährleistet ist. Hierbei hat sich ein niedriger Reibungskoeffizient µ zwischen Führungsleiste und Führungsnut als vorteilhaft erwiesen.

Auf jeder Seite der jeweiligen Führungsnut sind eine oder mehrere Aufnahmen angeordnet. Somit ist eine Anzahl und/oder eine Position der Reibungserhöhungselemente je nach Anforderung flexibel wählbar.

Bevorzugt können die Aufnahmen symmetrisch zu der jeweiligen Führungsnut angeordnet sein.

Alternativ oder zusätzlich dazu können eine oder mehrere asymmetrisch zu der jeweiligen Führungsnut angeordnete Aufnahmen vorgesehen sein. Somit ist eine weitere Möglichkeit geschaffen, die Position der Reibungserhöhungselemente je nach Anforderung flexibel wählbar zu gestalten.

Das Reibungserhöhungselement kann im Wesentlichen ringförmig ausgebildet sein und einen im Wesentlichen kreisförmigen oder im Wesentlichen rechteckförmigen Querschnitt aufweisen. Im Wesentlichen ringförmig schließt beispielsweise eine Ringform oder eine Zylinderform ein, wobei die Zylinderform einen kurzen oder einen langen Zylinder einschließt. Im Wesentlichen kreisförmig schließt beispielsweise einen etwa kreisrunden oder einen etwa elliptischen Querschnitt ein. Im Wesentlichen rechteckförmig schließt beispielsweise einen etwa quadratischen oder einen etwa rechteckigen Querschnitt oder einen etwa trapezförmigen Querschnitt ein. Vorteilhafterweise ist das Reibungserhöhungselement als ein O-Ring ausgebildet und die Ringnut ist zur Aufnahme eines O-Rings ausgebildet. Somit ist ein einfach erhältliches und günstiges Normteil und/oder Standardbauteil als das Reibungserhöhungselement verwendbar.

Der O-Ring kann aus Polyurethan (PU) ausgebildet sein, beispielsweise aus PU mit einer Shore-Härte von etwa 75A bis etwa 80A. In Kombination mit einem Fördergurt, der an der Tragseite mit einem Polyvinylchlorid (PVC) und an der Laufseite mit einem Polyester (PE)-Gewebe ausgebildet sein kann, ergibt sich eine Reibungszahl von etwa 0,5 bis etwa 0,6 zwischen Fördergurt und O-Ring mit den Eigenschaften und/oder Vorteilen wie oben beschrieben.

Die Führungsleiste kann als eine Keilleiste ausgebildet sein. Somit kommt ein ungekerbtes Profil zum Einsatz, was grundsätzlich eine längere Lebensdauer bietet, da wegen einer fehlenden Kerbwirkung keine Brüche im Profilfuß zu erwarten sind. Alternativ oder zusätzlich dazu können bei der Führungsleiste je nach Anwendungsfall gekerbte Profile und/oder andere Profilformen wie beispielsweise ein T-Profil zum Einsatz kommen.

Bei der Zuführvorrichtung sind mehrere Fördergurte etwa entlang der Zuführrichtung und etwa parallel nebeneinander angeordnet. Eine Gurtlänge der jeweiligen Fördergurte nimmt von einem ersten seitlichen Endabschnitt der Zuführvorrichtung zu einem zweiten seitlichen Endabschnitt der Zuführvorrichtung, insbesondere quer zu der Zuführrichtung gesehen, zu. Insbesondere kann die Gurtlänge der jeweiligen Fördergurte stufenweise zunehmen.

Die mehreren Fördergurte der Zuführvorrichtung weisen somit voneinander unterschiedliche Gurtlängen auf. Somit ist an einem Anschlussabschnitt der Zuführvorrichtung, mit dem die Zuführvorrichtung an die Fördereinrichtung anschließt, ein von etwa 90° zu der Zuführrichtung verschiedener Anschlusswinkel der Zuführvorrichtung zu der Fördereinrichtung realisierbar und somit ein entsprechender Aufstellwinkel der Zuführvorrichtung zu der Fördereinrichtung ausgleichbar. Bevorzugt ist der Anschlusswinkel derart gewählt, dass er sich mit dem Aufstellwinkel zu 90° ergänzt.

Vorteilhafterweise weisen die mittels der Zuführvorrichtung der Fördereinrichtung zugeführten Transportgüter bei einem günstig gewählten Aufstellwinkel von kleiner als 90° einen Geschwindigkeitsanteil in einer Förderrichtung der Fördereinrichtung auf, was eine weichere und somit schonendere Zuführung der Transportgüter von der Zuführvorrichtung auf die Fördereinrichtung ermöglicht. Zudem bietet dies Vorteile beim Platzbedarf, weil die Fördereinrichtung mit der derart aufgestellten Zuführvorrichtung schmaler ausgebildet ist als bei einem Aufstellwinkel von etwa 90°. Vorteilhafterweise liegen die, insbesondere oberen, Außenseiten der mehreren Fördergurte in einer gemeinsamen Ebene. Somit ist trotz eines Einsatzes mehrerer Fördergurte für die Zuführförderfläche eine ebene Fläche realisierbar.

Alternativ oder zusätzlich dazu können die, insbesondere oberen, Außenseiten der mehreren Fördergurte in jeweils voneinander verschiedenen Ebenen liegen. Insbesondere ist dabei ein Niveau der jeweiligen Ebenen mit der Gurtlänge der jeweiligen Fördergurte, insbesondere quer zu der Zuführrichtung gesehen, stetig, insbesondere stufenweise, verändert. Vorteilhafterweise ist dabei das Bett an die jeweiligen Ebenen angepasst.

Vorteilhafterweise ist mindestens eine und/oder jede der Endrollen als eine Spannrolle zum Spannen oder Entspannen des jeweils zugeordneten Fördergurts ausgebildet. Üblicherweise weist eine Spannrolle eine Spanneinrichtung zum Spannen oder Entspannen des zugeordneten Fördergurts auf, wobei üblicherweise eine Endrolle ausschließlich zum Umlenken des jeweils zugeordneten Fördergurts dient. Mit der vorteilhaften Ausbildung von jeder der Endrollen als eine Spannrolle ist eine notwendige Spannfunktion für den jeweiligen Fördergurt in die ohnehin erforderlichen Endrollen quasi integriert und eine Endrolle mit gesonderter Spanneinrichtung kann entfallen.

Insbesondere kann die Spannrolle zum Spannen des jeweils zugeordneten Fördergurts aus einer Entspannposition in eine Spannposition verschwenkbar sein. In der Entspannposition der Spannrolle ist der jeweils zugeordnete Fördergurt entspannt, wobei der jeweils zugeordnete Fördergurt in der Spannposition der Spannrolle gespannt ist.

Vorteilhafterweise ist die Spannrolle zur Montage oder Demontage des jeweils zugeordneten Fördergurts in die Entspannposition verschwenkbar. Somit ist mittels einfachen Verschwenkens der Spannrolle der jeweils zugeordnete Fördergurt gespannt oder entspannt und ist binnen kurzer Zeit betreibbar, montierbar und/oder demontierbar.

Insbesondere kann der jeweils zugeordnete Fördergurt in der Spannposition eine Gurtdehnung von etwa 2% bis etwa 8% aufweisen. Vorzugsweise weist der jeweils zugeordnete Fördergurt in der Spannposition eine Gurtdehnung von etwa 5% auf. Somit ist das oben genannte einfache Spannen oder Entspannen des jeweils der Spannrolle zugeordneten Fördergurts mittels einfachen Verschwenkens der Spannrolle weiter unterstützt.

Vorteilhafterweise ist von der Spannrolle beim Verschwenken von der Entspannposition in die Spannposition ein Totpunkt zu durchlaufen, an dem die Gurtdehnung größer ist als die in der Spannposition herrschende Gurtdehnung .

Zusätzlich dazu kann eine, insbesondere mechanische, Sicherung vorgesehen sein, mittels der die jeweilige Spannrolle in ihrer Spannposition verriegelbar ist, beispielsweise ein(e), insbesondere gegen eine Entriegelungsbewegung sicherbare(r), Stift oder Schraube, mittels der die Spannrolle an ihrer Verschwenkbewegung hinderbar ist.

Ein nicht beanspruchter Aspekt betrifft ein Verfahren zum Bereitstellen einer Zuführvorrichtung zum seitlichen Zuführen von Transportgütern auf eine Fördereinrichtung, mit einer Antriebsrolle und mindestens einer Endrolle und mindestens einem Fördergurt, wobei jeder der Endrollen einer der Fördergurte zugeordnet wird, der die Antriebsrolle und die jeweilige Endrolle umspannt und der mittels der Antriebsrolle angetrieben wird, und wobei an der Antriebsrolle ein Reibungserhöhungselement zur Reibungserhöhung zwischen dem jeweiligen Fördergurt und der Antriebsrolle angeordnet wird.

Die Vorteile des Verfahrens zum Bereitstellen der Zuführvorrichtung ergeben sich analog aus den zu der oben genannten Zuführvorrichtung genannten Merkmalen und deren Vorteile.

Nachfolgend sind Ausführungsbeispiele der erfindungsgemäßen Zuführvorrichtung anhand von Zeichnungen näher erläutert. Es zeigen:
- Fig. 1: eine räumliche Draufsicht einer Zuführvorrichtung gemäß einem ersten Ausführungsbeispiel,
- Fig. 2: eine schematische Draufsicht einer Zuführvorrichtung gemäß einem zweiten Ausführungsbeispiel, die zum Zuführen von Transportgütern an eine Fördereinrichtung angeordnet ist,
- Fig. 3: eine gegenüber Fig. 2 vergrößert dargestellte Vorderansicht einer Antriebsrolle für die Zuführvorrichtung gemäß dem zweiten Ausführungsbeispiel,
- Fig. 4: einen gegenüber Fig. 2 vergrößerten Querschnitt einer Vorderansicht der Zuführvorrichtung mit Blickrichtung auf die Endrollen, und
- Fig. 5: eine räumliche Draufsicht einer als Spannrolle ausgeführten Endrolle.

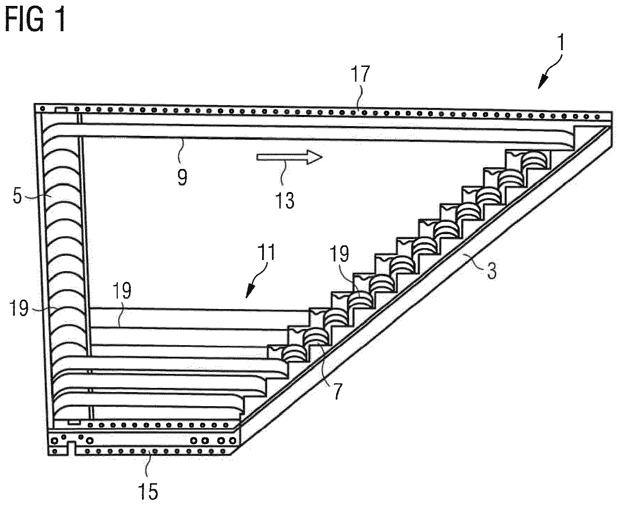

Fig. 1 zeigt eine Zuführvorrichtung 1 gemäß einem ersten Ausführungsbeispiel mit einer in einem Rahmen 3 angeordneten Antriebsrolle 5 und mehreren, hier sechzehn, Endrollen 7, denen jeweils ein Fördergurt 9 zugeordnet ist - in diesem Ausführungsbeispiel somit mit sechzehn Fördergurten 9. Zwischen der Antriebsrolle 5 und den Endrollen 7 ist ein Bett 11 angeordnet. Die Antriebsrolle 5, die Endrollen 7 und das Bett 11 sind an dem Rahmen 3 angebracht.

Die Fördergurte 9 sind etwa entlang einer mittels eines Pfeils dargestellten Zuführrichtung 13 und etwa parallel nebeneinander angeordnet. Die Zuführrichtung 13 weist von der Antriebsrolle 5 weg zu den Endrollen 7. In dieser Darstellung sind zur besseren Veranschaulichung des Aufbaus der Zuführvorrichtung 1 einige der Fördergurte 9 weggelassen, auch das Bett 11 ist nicht vollständig dargestellt. Eine Gurtlänge der jeweiligen Fördergurte 9 nimmt von einem ersten seitlichen Endabschnitt 15 der Zuführvorrichtung 1 zu einem zweiten seitlichen Endabschnitt 17 der Zuführvorrichtung 1 quer zu der Zuführrichtung 13 gesehen stufenweise zu.

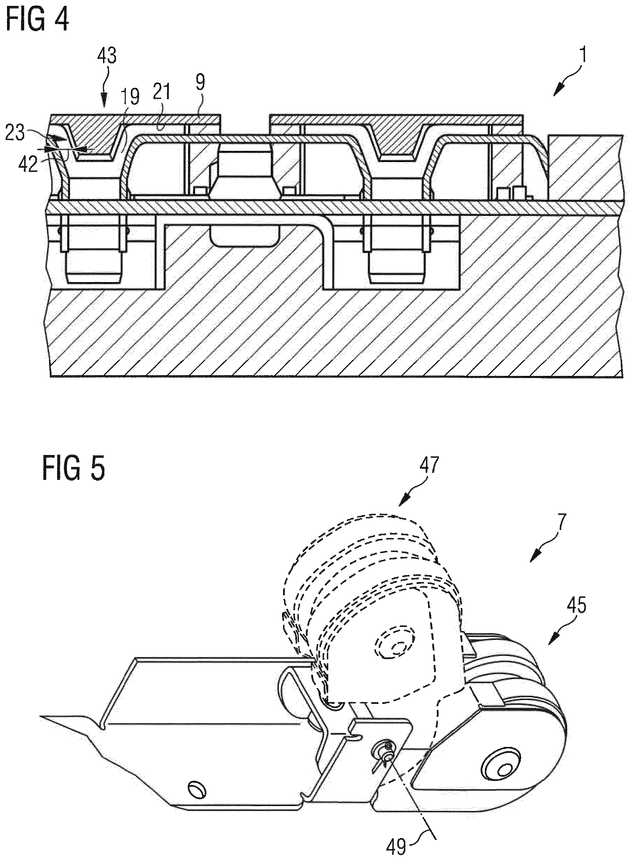

An der Antriebsrolle 5, dem Bett 11 und den Endrollen 7 ist jeweils eine jedem der Fördergurte 9 zugeordnete Führungsnut 19 ausgebildet, die zur seitlichen Führung des jeweiligen Fördergurts 9 dient. Wie nachfolgend mit Verweis auf Fig. 4 ausgeführt, greift eine jeweils etwa mittig an einer Innenseite 21 des Fördergurts ausgebildete Führungsleiste 23 in die der jeweiligen Führungsleiste 23 lagemäßig entsprechenden Führungsnut 19 ein. Die Führungsleiste 23 ist etwa entlang der Zuführrichtung 13 ausgebildet.

Die Zuführvorrichtung 1 stellt eine Zuführförderfläche für Transportgüter bereit, auf der die Transportgüter auf den Fördergurten 9 in der Zuführrichtung 13 förderbar sind. Die Zuführförderfläche ist mittels der oberen Außenseiten 43 der Fördergurte 9 bereitgestellt. Die Zuführvorrichtung 1 kann beispielsweise tischartig ausgebildet sein, wobei die Zuführförderfläche als Tischoberfläche ausgebildet ist.

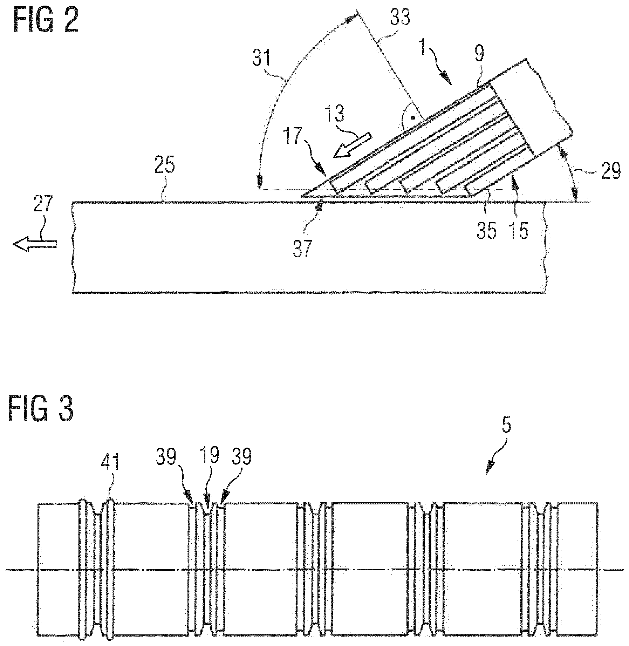

Fig. 2 zeigt in einer Draufsicht eine Zuführvorrichtung 1 gemäß einem zweiten Ausführungsbeispiel, die zum Zuführen von Transportgütern an eine Fördereinrichtung 25 angeordnet ist. Die Zuführvorrichtung 1 gemäß dem zweiten Ausführungsbeispiel unterscheidet sich insbesondere in der Anzahl der Fördergurte 9 und der zugeordneten Endrollen 7 von der Zuführvorrichtung 1 gemäß dem ersten Ausführungsbeispiel. Die Zuführvorrichtung 1 gemäß dem zweiten Ausführungsbeispiel weist fünf Fördergurte 9 und fünf zugeordnete Endrollen 7 auf.

Aus Gründen der Platzersparnis und/oder um den zuzuführenden Transportgütern einen Geschwindigkeitsanteil in einer mit einem Pfeil dargestellten Förderrichtung 27 der Fördereinrichtung 25 zu verleihen, ist die Zuführvorrichtung 1 unter einem Aufstellwinkel 29 von kleiner als 90° an der Fördereinrichtung 25 angeordnet; bei diesem Ausführungsbeispiel beträgt der Aufstellwinkel 29 etwa 30°. Die Förderrichtung 27 ist eine Richtung, in der Transportgüter auf der Fördereinrichtung 25 beförderbar sind.

Die unterschiedlichen Gurtlängen der jeweiligen Fördergurte 9 sind vorteilhafterweise derart ausgebildet, dass sich der Aufstellwinkel 29 mit einem Anschlusswinkel 31 der Zuführvorrichtung 1 zu etwa 90° ergänzt. Dadurch kann der Aufstellwinkel 29 ausgeglichen und ein gleichmäßiger Übergang der Zuführvorrichtung 1 zu der Fördereinrichtung 25 erreicht werden, wodurch eine schonende Zuführung der Transportgüter von der Zuführvorrichtung auf die Fördereinrichtung 25 ermöglicht werden kann. Der Anschlusswinkel 31, der hier etwa 60° beträgt, erstreckt sich zwischen einem Lot 33 zu der Zuführrichtung 13 und einer gestrichelt dargestellten Verbindungslinie 35 der (hier nicht dargestellten) Endrollen 7. Die Verbindungslinie 35 verläuft im Wesentlichen etwa parallel zu der Zuführrichtung 13. Ein Anschlussabschnitt 37 des Rahmens 3 an der Zuführvorrichtung 1, mit dem die Zuführvorrichtung 1 auf die Fördereinrichtung 25 trifft, ist etwa parallel zu der Verbindungslinie 35 und/oder zu der Zuführrichtung 13 ausgerichtet.

In der Fig. 2 ist aus Gründen der Übersichtlichkeit lediglich eine Zuführvorrichtung 1 an der Fördereinrichtung 27 angeordnet, es können aber mehrere Zuführvorrichtungen 1 an der Fördereinrichtung 25 angeordnet sein, insbesondere auf beiden Seiten der Fördereinrichtung 25. Auf gegenüberliegenden Seiten der Fördereinrichtung 25 angeordnete Zuführvorrichtungen 1 sind im Wesentlichen spiegelbildlich zu der Förderrichtung 27 ausgebildet, insbesondere bezüglich deren Aufstellwinkeln 29 und Anschlusswinkeln 31.

Fig. 3 zeigt die Antriebsrolle 5 der Zuführvorrichtung 1 aus Fig. 2, bei der zusätzlich zu der oben beschriebenen Führungsnut 19 Aufnahmen 39 für ein Reibungserhöhungselement 41 vorgesehen sind. Zu beiden Seiten jeder Führungsnut 19 ist eine Aufnahme 39 vorgesehen, die hier jeweils als umlaufende Ringnut ausgebildet ist. Die in den Aufnahmen 39 aufgenommenen Reibungserhöhungselemente 41 sind hier lediglich neben der äußersten linken Führungsnut 19 dargestellt. Die Antriebsrolle 5 ist im Vergleich zu Fig. 2 vergrößert dargestellt.

Das Reibungserhöhungselement 41 ist als ein O-Ring ausgebildet, der zumindest teilweise in der Aufnahme 39 aufgenommen ist und in radialer Richtung teilweise über die Antriebsrolle 5, genauer gesagt über einen Mantel der Antriebsrolle 5, übersteht. Der O-Ring ist hier aus Polyurethan (PU) mit einer Shore-Härte von etwa 75A bis 80A ausgebildet, was eine im Vergleich zu der Antriebsrolle erhöhte Reibungszahl zwischen den Fördergurten 9 und den O-Ringen von etwa 0,5 bis etwa 0,6 bedingt. Die Fördergurte 9 sind jeweils an ihrer Tragseite mit einem Polyvinylchlorid (PVC) und an ihrer Laufseite mit einem Polyester (PE)-Gewebe ausgebildet. Der O-Ring steht mit dem jeweiligen Fördergurt 9 in Berührkontakt. Dadurch kann eine Reibung, insbesondere eine Haftreibung, zwischen der Antriebsrolle 5 und dem jeweiligen Fördergurt 9 erhöht sein.

Die Führungsnut 19 in der Antriebsrolle 5 ist hier als eine Keilnut für die als Keilleiste ausgebildete oben beschriebene Führungsleiste 23 (siehe Fig. 4) ausgebildet. Die Antriebsrolle 5 ist aus Polyurethan (PU) mit einer Shore-Härte von etwa 80D ausgebildet, was an der Antriebsrolle 5 eine geringe Reibung zwischen der jeweiligen Führungsleiste 23 und der zugeordneten Führungsnut 19 ermöglicht. Dadurch kann ein, insbesondere mittels einer Relativbewegung zwischen der jeweiligen Führungsleiste 23 und der zugeordneten Führungsnut 19 verursachter, Abrieb an der jeweiligen Führungsleiste 23 und/oder der zugeordneten Führungsnut 19 verringert werden.

In dem in Fig. 4 gezeigten, gegenüber Fig. 2 vergrößert dargestellten, Querschnitt einer Vorderansicht der Zuführvorrichtung 1 mit Blickrichtung auf die Endrollen 7 sind die oben zu Fig. 1 erwähnten Führungsleisten 23 zu sehen, die an jedem der Fördergurte 9 etwa mittig an dessen Innenseite 21 etwa entlang der Zuführrichtung 13 ausgebildet sind. Die Führungsleisten 23 sind hier als Keilleisten ausgebildet.

Zur seitlichen Führung des jeweiligen Fördergurts 9 greift dessen Führungsleiste 23 in eine dem jeweiligen Fördergurt 9 zugeordnete Führungsnut 19 ein. Die Führungsnut 19 kann mehrteilig ausgebildet sein und mehrere Abschnitte aufweisen. Die Führungsnut 19 kann abschnittsweise in der Antriebsrolle 5, dem Bett 11 und/oder der dem jeweiligen Fördergurt 9 zugeordneten Endrolle 7 ausgebildet sein. Die Anordnung der Führungsnut 19 kann der Anordnung der zugeordneten Führungsleiste 23, insbesondere bezüglich einer Richtung etwa quer zu der Zuführrichtung 13, im Wesentlichen entsprechen. Die jeweilige Führungsnut 19 kann als Keilnut ausgebildet sein, und einen Querschnitt (in einer Ebene senkrecht zur Zuführrichtung 13) aufweisen, der im Wesentlichen komplementär zu der als Keilleiste ausgebildete Führungsleiste 23 ausgebildet ist.

Ein seitliches Spiel 42 zwischen der jeweiligen Führungsleiste 23 und der zugeordneten Führungsnut 19 in der Antriebsrolle 5 ist geringer als in dem Bett 11 ausgebildet, womit eine Seitenführung des jeweiligen Fördergurts 9 mittels der zugeordneten Führungsnut 19 in der Antriebsrolle 5 bereitgestellt ist. Das seitliche Spiel 42 ist etwa parallel zu einer Ebene des jeweiligen Fördergurts 9, beispielsweise einer Ebene einer oberen Außenseite 43 des jeweiligen Fördergurts 9, und im Wesentlichen senkrecht zu der Zuführrichtung 13 ausgebildet. Die Seitenführung des jeweiligen Fördergurts 9 kann somit wirksam auf einer kürzeren Eingriffsstrecke zwischen der jeweiligen Führungsleiste 23 und der zugeordneten Führungsnut 19 bereitgestellt werden, als das z.B. bei der Seitenführung des jeweiligen Fördergurts 9 in dem Bett 11 der Fall wäre. Alleine aufgrund der verringerten Eingriffsstrecke kann dies eine verringerte Reibung und somit einen verringerten Verschleiß an der jeweiligen Führungsleiste 23 und/oder der zugeordneten Führungsnut 19 bewirken.

Die jeweiligen oberen Außenseiten 43 der Fördergurte 9 liegen hier in einer gemeinsamen Ebene, durch die die Zuführförderfläche bereitgestellt werden kann.

In Fig. 5 ist eine als Spannrolle ausgeführte Endrolle 7 in einer räumlichen Draufsicht gezeigt. Eine Spannposition 45 der Endrolle 7 ist mit durchgezogenen Linien gezeichnet, eine Entspannposition 47 der Endrolle 7 ist mit gestrichelten Linien gezeichnet. Die Endrolle 7 ist um eine Verschwenkachse 49 von der Entspannposition 47 in die Spannposition 45 verschwenkbar. Somit ist mittels einfachen Verschwenkens der Endrolle 7 der jeweils zugeordnete Fördergurt 9 spannbar oder entspannbar und ist binnen kurzer Zeit betreibbar, oder montierbar oder demontierbar.

Von der Endrolle 7 ist beim Verschwenken von der Entspannposition 47 in die Spannposition 45 ein Totpunkt (hier nicht dargestellt) durchlaufen, an dem die Gurtdehnung größer ist als in der Spannposition.

Die hier gezeigte Konstruktion ist insbesondere unter Berücksichtigung einer Verschwenkrichtung der Endrolle 7 aus der Entspannposition 47 in die Spannposition 45 und einer Laufrichtung des zugeordneten Fördergurts 9 derart ausgeführt, dass die jeweilige Endrolle 7 mittels einer aus der Gurtdehnung in der Spannposition 45 resultierenden Kraft auf die Endrolle 7 in ihrer Spannposition 45 gehalten ist. Zusätzlich dazu kann eine, insbesondere mechanische, Sicherung vorgesehen sein, mittels der die jeweilige Endrolle 7 in ihrer Spannposition 45 verriegelbar ist.

### Bezugszeichenliste

- 1: Zuführvorrichtung
- 3: Rahmen
- 5: Antriebsrolle
- 7: Endrolle
- 9: Fördergurt
- 11: Bett
- 13: Zuführrichtung
- 15: erster seitlicher Endabschnitt der Zuführvorrichtung
- 17: zweiter seitlicher Endabschnitt der Zuführvorrichtung
- 19: Führungsnut
- 21: Innenseite des Fördergurts
- 23: Führungsleiste
- 25: Fördereinrichtung
- 27: Förderrichtung
- 29: Aufstellwinkel
- 31: Anschlusswinkel
- 33: Lot zu der Zuführrichtung
- 35: Verbindungslinie
- 37: Anschlussabschnitt
- 39: Aufnahme für Reibungserhöhungselement
- 41: Reibungserhöhungselement
- 42: seitliches Spiel der Führungsleiste in der Führungsnut
- 43: obere Außenseite des Fördergurts
- 45: Spannposition der Spannrolle
- 47: Entspannposition der Spannrolle
- 49: Verschwenkachse

## Patentansprüche

1. Zuführvorrichtung zum seitlichen Zuführen von Transportgütern auf eine Fördereinrichtung (25), mit:
- einer Antriebsrolle (5);
- mindestens einer Endrolle (7) und
- mehreren Fördergurten (9),
wobei die Fördergurte (9) etwa entlang der Zuführrichtung (13) und etwa parallel nebeneinander angeordnet sind, und wobei eine Gurtlänge der jeweiligen Fördergurte (9) von einem ersten seitlichen Endabschnitt (15) der Zuführvorrichtung zu einem zweiten seitlichen Endabschnitt (15) der Zuführvorrichtung zunimmt,
wobei jeder der Endrollen (7) einer der Fördergurte (9) zugeordnet ist, der die Antriebsrolle (5) und die zugeordnete Endrolle (7) umspannt und der mittels der Antriebsrolle (5) antreibbar ist,
wobei jeder der Fördergurte (9) auf seiner Innenseite (21) eine etwa entlang einer Zuführrichtung (13) angeordnete Führungsleiste (23) aufweist, die zur Seitenführung des jeweiligen Fördergurts (9) in eine jeder Führungsleiste (23) zugeordnete Führungsnut (19) eingreift, und
wobei jede der Führungsnuten (19) in der Antriebsrolle (5) und in der mindestens einen Endrolle (7) ausgebildet ist,
**dadurch gekennzeichnet, dass**
an der Antriebsrolle (5) mindestens ein Reibungserhöhungselement (41) zur Reibungserhöhung zwischen dem jeweiligen Fördergurt (9) und der Antriebsrolle (5) ausgebildet ist, und darin, dass
an der Antriebsrolle (5) auf jeder Seite der jeweiligen Führungsnut (19) mindestens eine Aufnahme (39) für das Reibungserhöhungselement (41) ausgebildet ist und in der jeweiligen Aufnahme (39) jeweils ein Reibungserhöhungselement (41) angeordnet ist.

2. Zuführvorrichtung nach Anspruch 1, wobei das Reibungserhöhungselement (41) lösbar an der Antriebsrolle befestigt ist.

3. Zuführvorrichtung nach einem der vorherigen Ansprüche, wobei die Aufnahme (39) als mindestens eine Ringnut ausgebildet ist.

4. Zuführvorrichtung nach einem der vorherigen Ansprüche, wobei das Reibungserhöhungselement (41) im Wesentlichen ringförmig ausgebildet ist und einen im Wesentlichen kreisförmigen oder im Wesentlichen rechteckförmigen Querschnitt aufweist.

5. Zuführvorrichtung nach einem der Ansprüche 1 bis 4, wobei die Führungsleiste (23) als eine Keilleiste ausgebildet ist.

6. Zuführvorrichtung nach einem der vorherigen Ansprüche, wobei jede der Endrollen (7) als eine Spannrolle zum Spannen des jeweils zugeordneten Fördergurts (9) ausgebildet ist.

7. Zuführvorrichtung nach Anspruch 6, wobei die Endrolle (7) zum Spannen des jeweils zugeordneten Fördergurts (9) aus einer Entspannposition (47) in eine Spannposition (45) verschwenkbar ist, und wobei die Endrolle (7) zur Montage oder Demontage des jeweils zugeordneten Fördergurts (9) in die Entspannposition (47) verschwenkbar ist.

8. Zuführvorrichtung nach Anspruch 7, wobei der jeweils zugeordnete Fördergurt (9) in der Spannposition (45) eine Gurtdehnung von etwa 2% bis etwa 8% aufweist.

9. Zuführvorrichtung nach Anspruch 7 oder 8, wobei von der Endrolle (7) beim Verschwenken von der Entspannposition (47) in eine Spannposition (45) ein Totpunkt durchlaufen ist, bei dem die Gurtdehnung größer ist als die Gurtdehnung in der Spannposition (45).

## Claims

1. Supply device for feeding transported goods laterally onto a conveying installation (25), having:
- a drive roller (5);
- at least one end roller (7); and
- a plurality of conveyor belts (9),
wherein the conveyor belts (9) are disposed approximately along the supply direction (13) and approximately in parallel next to one another, and wherein a belt length of the respective conveyor belts (9) increases from a first lateral end portion (15) of the supply device to a second lateral end portion (17) of the supply device;
wherein each of the end rollers (7) is assigned one of the conveyor belts (9) which encompasses the drive roller (5) and the assigned end roller (7), and which is able to be driven by means of the drive roller (5);
wherein each of the conveyor belts (9) on the internal side (21) thereof has a guide strip (23) which is disposed approximately along a supply direction (13) and which for laterally guiding the respective conveyor belt (9) engages in a guide groove (19) that is assigned to each guide strip (23); and
wherein each of the guide grooves (19) is configured in the drive roller (5) and in the at least one end roller (7),
**characterized in that**
at least one friction-increasing element (41) for increasing the friction between the respective conveyor belt (9) and the drive roller (5) is configured on the drive roller (5), and **in that** on the drive roller (5) at least one receptacle (39) for the friction-increasing element (41) is configured on each side of the respective guide groove (19), and one friction-increasing element (41) is in each case disposed in the respective receptacle (39).

2. Supply device according to Claim 1, wherein the friction-increasing element (41) is releasably fastened to the drive roller.

3. Supply device according to either of the preceding claims, wherein the receptacle (39) is configured as at least one annular groove.

4. Supply device according to one of the preceding claims, wherein the friction-increasing element (41) is configured so as to be substantially annular and has a substantially circular or substantially rectangular cross section.

5. Supply device according to one of Claims 1 to 4, wherein the guide strip (23) is configured as a wedge strip.

6. Supply device according to one of the preceding claims, wherein each of the end rollers (7) is configured as a tension roller for tensioning the respective assigned conveyor belt (9).

7. Supply device according to Claim 6, wherein the end roller (7) for tensioning the respective assigned conveyor belt (9) is pivotable from a relaxing position (47) to a tensioning position (45), and wherein the end roller (7) for assembling or disassembling the respective assigned conveyor belt (9) is pivotable to the relaxing position (47).

8. Supply device according to Claim 7, wherein the respective assigned conveyor belt (9) in the tensioning position (45) has a belt elongation of approximately 2% to approximately 8%.

9. Supply device according to Claim 7 or 8, wherein the end roller (7), when pivoting from the relaxing position (47) to a tensioning position (45), passes a dead centre in which the belt elongation is greater than the belt elongation in the tensioning position (45).

## Revendications

1. Dispositif d'amenée pour l'amenée latérale de produits à transporter sur un système de transport (25), comprenant :
- un rouleau d'entraînement (5) ;
- au moins un rouleau d'extrémité (7) et
- plusieurs bandes transporteuses (9),
les bandes transporteuses (9) étant agencées approximativement le long de la direction d'amenée (13) et approximativement parallèlement les unes à côté des autres, et une longueur de bande des bandes transporteuses respectives (9) augmentant d'une première section d'extrémité latérale (15) du dispositif d'amenée à une deuxième section d'extrémité latérale (17) du dispositif d'amenée,
chacun des rouleaux d'extrémité (7) étant associé à une des bandes transporteuses (9), qui est tendue autour du rouleau d'entraînement (5) et du rouleau d'extrémité associé (7) et qui peut être entraînée au moyen du rouleau d'entraînement (5),
chacune des bandes transporteuses (9) comprenant sur son côté intérieur (21) une barre de guidage (23) agencée approximativement le long d'une direction d'amenée (13), qui pénètre dans une rainure de guidage (19) associée à chaque barre de guidage (23) pour le guidage latéral de la bande transporteuse respective (9), et
chacune des rainures de guidage (19) étant formée dans le rouleau d'entraînement (5) et dans l'au moins un rouleau d'extrémité (7),
**caractérisé en ce que**
au moins un élément d'augmentation de friction (41) destiné à augmenter la friction entre la bande transporteuse respective (9) et le rouleau d'entraînement (5) est formé sur le rouleau d'entraînement (5), et **en ce que**
au moins un logement (39) pour l'élément d'augmentation de friction (41) est formé sur le rouleau d'entraînement (5) sur chaque côté de la rainure de guidage respective (19), et un élément d'augmentation de friction (41) est agencé à chaque fois dans le logement respectif (39) .

2. Dispositif d'amenée selon la revendication 1, l'élément d'augmentation de friction (41) étant fixé de manière amovible au rouleau d'entraînement.

3. Dispositif d'amenée selon l'une quelconque des revendications précédentes, le logement (39) étant configuré sous la forme d'au moins une rainure annulaire.

4. Dispositif d'amenée selon l'une quelconque des revendications précédentes, l'élément d'augmentation de friction (41) étant configuré sous forme essentiellement annulaire et présentant une section transversale essentiellement circulaire ou essentiellement rectangulaire.

5. Dispositif d'amenée selon l'une quelconque des revendications 1 à 4, dans lequel la barre de guidage (23) est configurée sous la forme d'une barre trapézoïdale.

6. Dispositif d'amenée selon l'une quelconque des revendications précédentes, chacun des rouleaux d'extrémité (7) étant configuré sous la forme d'un rouleau tendeur pour la tension de la bande transporteuse respectivement associée (9).

7. Dispositif d'amenée selon la revendication 6, le rouleau d'extrémité (7) pouvant être amené à pivoter d'une position de détente (47) dans une position de tension (45) pour la tension de la bande transporteuse respectivement associée (9), et le rouleau d'extrémité (7) pouvant être amené à pivoter dans la position de détente (47) pour le montage ou le démontage de la bande transporteuse respectivement associée (9).

8. Dispositif d'amenée selon la revendication 7, la bande transporteuse respectivement associée (9) présentant dans la position de tension (45) un allongement de bande d'approximativement 2 % à approximativement 8 %.

9. Dispositif d'amenée selon la revendication 7 ou 8, un point mort étant traversé par le rouleau d'extrémité (7) lors du pivotement de la position de détente (47) dans une position de tension (45), dans lequel l'allongement de bande est supérieur à l'allongement de bande dans la position de tension (45).
